# FASCICULE DE BREVET EUROPEEN

(11) **EP 1 176 106 B1**
(45) Date de publication et mention de la délivrance du brevet: **13.12.2006**
(21) Numéro de dépôt: 01401619.0
(22) Date de dépôt: 19.06.2001
(51) Int. Cl.: B65G 1/137

(54) **Procédé et système pour la préparation automatisée de prises de médicaments à partir d'ordonnances informatisées**
Verfahren und System zur automatischen Dosierung von Arzneimitteln gemäss einer computerisierten Verordnung
Process and system for automatically preparing doses of medication according to computerised prescriptions

(30) Priorité: 30.06.2000 FR 0008545
(43) Date de publication de la demande: 30.01.2002
(73) Titulaire: Assistance Publique Hopitaux De Paris, 75010 Paris (FR); Thibault, Jacques Gabriel Auguste, F-94000 Creteil (FR)
(72) Inventeur: Thibault, Jacques, 94000 Creteil (FR); Hazerbroucq, Georges, 75014 Paris (FR)
(74) Mandataire: de Roquemaurel, Bruno

(56) Documents cités:
- DE-U- 9 416 212
- US-A- 3 732 544

## Description

La présente invention concerne un procédé et un dispositif pour la préparation automatique d'ordonnances informatisées (voir, par exemple, le document US-A-3732544).

Elle s'applique notamment, mais non exclusivement, au milieu hospitalier où un grand nombre d'ordonnances doivent être traitées pour préparer les doses de médicaments prescrites aux malades. Ces doses de médicaments se présentent sous forme liquide, conditionnées en ampoules ou petits flacons, ou sous forme de comprimés emballés dans des plaquettes munies d'alvéoles recevant chacune un comprimé ou dose unitaire, et fermées par un film thermo-soudé. Les médicaments sont donc conditionnés dans un premier emballage ou conditionnement primaire renfermant une dose unitaire de médicament, puis sont ensuite disposés dans des boîtes en carton pouvant renfermer un ou plusieurs conditionnements primaires. Les ordonnances prescrivent un ou plusieurs médicaments à consommer en une ou plusieurs prises journalières pendant une certaine période, chaque prise pouvant comporter une ou plusieurs doses unitaires d'un ou de plusieurs médicaments. Dans le texte qui suit, le terme prise sera donc employé pour désigner l'ensemble des doses unitaires de médicaments qui sont prescrites à un patient pour être consommées à un instant donné.

La tâche de préparation les doses prescrites par les ordonnances doit respecter des règles strictes d'hygiène et de traçabilité, tout en assurant une sécurité absolue dans le respect et le contrôle de la prescription. Cette tâche est généralement effectuée manuellement. Elle est donc par définition sujette à erreur. Par conséquent, elle n'assure pas une sécurité suffisante et rend difficile la traçabilité, tout en augmentant le temps nécessaire de traitement d'une ordonnance.

Pour résoudre ce problème, on a déjà proposé des systèmes automatisés de traitement des ordonnances. Ces systèmes comportent notamment des dispositifs de comptage et de distribution de comprimés. Pour pouvoir compter les comprimés, ces dispositifs nécessitent que les comprimés soient livrés en vrac ou préalablement dégagés de leur conditionnement primaire d'origine.
Cette solution présente donc un premier inconvénient d'utiliser une main d'oeuvre importante pour "écosser" les comprimés en vue d'alimenter les dispositifs de distribution. Autre inconvénient, cette opération doit être effectuée dans un environnement respectant strictement des conditions d'hygiène et de conservation des comprimés, notamment l'hydrométrie de l'air ambiant. Ces conditions doivent également être respectées dans le magasin de stockage de comprimés de ces dispositifs de distribution.
Cette solution n'offre pas non plus une sécurité suffisante étant donné que lorsqu'un médicament est dégagé de tout conditionnement, on ne peut plus l'identifier de manière certaine et on ne peut pas en déterminer la date de péremption, ni suivre sa trace.

Par ailleurs, les comprimés et les autres formes de conditionnement des médicaments présentent des formes et des dimensions très variables, et les dispositifs de distribution de médicament connus se prêtent mal à une telle variété, et lorsqu'ils acceptent plusieurs formes de médicaments, ils nécessitent des réglages électromécaniques fins, impliquant l'intervention de spécialistes.
Dans le cas particulier des comprimés, comme ceux-ci sont manipulés par le dispositif de distribution en dehors de tout conditionnement, ils sont amenés à se désagréger partiellement à la suite de frottements, voire à se briser ou s'écraser lorsque le dispositif n'est pas parfaitement bien réglé.

La présente invention a pour but de supprimer ces inconvénients. A cet effet, elle propose un procédé pour préparer automatiquement les prises de médicaments d'un patient, à partir d'une ordonnance informatisée prescrivant des médicaments déterminés pendant une période définie en un nombre déterminé de prises, les médicaments étant emballés dans leur conditionnement primaire d'origine se présentant sous la forme de plaquettes rassemblant dans des alvéoles respectives un nombre prédéterminé de doses unitaires d'un même médicament.

Selon l'invention, ce procédé est caractérisé en ce qu'il comprend une phase préalable de pré-conditionnement des médicaments dans leur conditionnement primaire d'origine, cette phase de pré-conditionnement comprenant les étapes suivantes pour chaque médicament à stocker :
- l'identification de la référence du médicament,
- l'introduction et la mémorisation des emplacements respectifs sur la plaquette des doses unitaires du médicament,
- le pré-conditionnement des plaquettes en bandes,
- le rangement des bandes supportant le médicament dans un poste de stockage, et
- la mémorisation de l'emplacement de stockage du médicament en association avec l'identification de la référence du médicament.

Grâce à ces dispositions, les comprimés ne sont plus retirés de leur conditionnement primaire d'origine. En outre, ce procédé est adapté à distribuer des formes variées de médicaments sans nécessiter l'intervention de spécialistes. En effet, par la simple introduction des emplacements des doses unitaires sur la bande, il est possible en découpant la bande et la plaquette fixée dessus, de séparer individuellement les doses unitaires de médicament qui restent ainsi dans leur conditionnement primaire d'origine, sans aucun risque de découper ou briser une dose unitaire.

Le traitement d'une ordonnance comprend avantageusement les étapes suivantes pour chaque prise de l'ordonnance, et pour chaque référence de médicament de la prise :
- la détermination de l'emplacement de stockage où se trouve le médicament à rechercher,
- la détermination du nombre de doses unitaires du médicament de la prise,
- la préhension de la bande de médicament recherchée pour la retirer partiellement de son emplacement sur une certaine longueur en fonction du nombre de doses unitaires à prendre,
- le découpage de la bande pour en séparer le nombre de doses unitaires prescrit par l'ordonnance, en tenant compte des emplacements respectifs des doses unitaires du médicament sur la bande, et
- la disposition des doses unitaires découpées dans un emballage prévu à cet effet.

Un tel procédé se prête tout à fait à une automatisation complète de la préparation d'ordonnances.

Avantageusement, le procédé comporte également une étape d'impression d'informations sur l'emballage ainsi réalisé, ces informations permettant d'identifier le patient à qui sont destinés les médicaments ainsi rassemblés, et pour chaque prise, les médicaments de la prise en association avec l'indication du moment auquel la prise doit être effectuée. Ces informations peuvent également contenir d'autres consignes si nécessaire.

Selon une particularité de l'invention, les médicaments de chaque ordonnance sont disposés dans une barquette spécifique comportant plusieurs cases, chacune étant destinée à recevoir une prise respective, les cases de la barquette étant refermées hermétiquement par un film en fin de préparation de l'ordonnance, par soucis de sécurité, pour éviter toute manipulation intempestive avant la livraison de la barquette au patient.

Alternativement, les médicaments de chaque ordonnance sont déposés dans une
ou plusieurs poches, les médicaments de chaque prise étant séparés de ceux des autres prises.

Selon une autre particularité de l'invention, les bandes recevant les plaquettes de médicament se présentent sous la forme de tronçons supportant des plaquettes d'une même référence de médicament provenant d'un même lot, ces tronçons étant disposés dans des cartouches qui sont rangées respectivement dans les logements du poste de stockage, un code d'identification du médicament étant apposé sur la cartouche.

Les bandes recevant les plaquettes de médicament présentent toujours la même largeur qui est déterminée de manière à être supérieure à toutes les plaquettes susceptibles d'être ainsi pré-conditionnées.

Ces dispositions permettent de faciliter la préhension des doses unitaires de médicament, la bande ayant toujours les mêmes dimensions quelles que soient les dimensions des plaquettes. Elles garantissent également la traçabilité et permettent d'éviter tout risque d'erreur dans la préparation des ordonnances.

L'invention concerne également un système pour la mise en oeuvre du procédé selon l'invention, ce système comprenant un poste de stockage des médicaments conçu pour recevoir les plaquettes de médicament fixées sur un film en bandes.

Si les doses unitaires de médicament ne sont pas déjà pré-conditionnées en bandes, mais en plaquettes, ce système comprend un poste de pré-conditionnement des plaquettes de médicament en bandes, ce poste comprenant des moyens pour fixer les plaquettes de médicament sur un film en bandes.

De cette manière, la préhension des doses unitaires de médicament pour la préparation des ordonnances peut être facilement automatisée sans être affectée par les différentes formes et présentations des médicaments.

Selon une particularité de l'invention, ce système comprend en outre :
- un poste de conditionnement des prises de médicaments prescrites par les ordonnances traitées,
- un robot assurant la manutention des médicaments entre le poste pré-conditionnement, le poste de stockage et le poste de conditionnement des prises, ce robot comportant des moyens pour découper le film et les plaquettes de médicaments collées dessus, de manière à en séparer au moins une dose unitaire de médicament, et
- un calculateur recevant les ordonnances à traiter et assurant la commande et la gestion des dits postes et du robot en fonction des informations figurant sur les ordonnances, ainsi que la gestion des stocks de médicaments.

Avantageusement, le robot comprend une main comportant une mâchoire formée de deux demi mâchoires supportant chacune une lame constituée de deux parties rectilignes, de préférence à angle droit, les lames respectives des demi mâchoires sont fixées et actionnées de manière à coopérer l'une par rapport à l'autre à la façon de ciseaux pour effectuer des découpes en commençant par un bord du film.

Selon une particularité de l'invention, la mâchoire en position serrée forme un réceptacle, de préférence fermé, destiné à recevoir les doses unitaires de médicament découpées en vue de les transporter jusqu'au poste de conditionnement des prises, sans risque de les perdre.

D'autres caractéristiques et avantages de la présente invention sont mentionnés dans la description détaillée qui suit d'un mode de réalisation préféré de l'invention et dans les revendications annexées.

Un mode de réalisation du système selon l'invention sera décrit ci-après, à titre d'exemple non limitatif, avec référence aux dessins annexés dans lesquels :
La figure 1 représente schématiquement une vue générale de dessus du système de préparation d'ordonnances selon l'invention ;
La figure 2 montre une vue détaillée de profil du poste de pré-conditionnement des médicaments ;
La figure 3 montre en coupe transversale éclatée une plaquette de médicament collée sur un film en bande selon l'invention ;
La figure 4 montre une vue détaillée de profil du poste de conditionnement des doses unitaires de médicament d'une ordonnance ;
La figure 5 montre en perspective une unité de stockage des médicaments utilisés pour la préparation des ordonnances ;
La figure 6 représente en perspective le mode de stockage en bande des médicaments dans une cartouche montrée en vue partielle, la cartouche étant engagée dans des glissières d'un logement de l'unité de stockage montrée sur la figure 5 ;
La figure 7 représente en vue de face la main d'un robot conçu pour effectuer le rangement des cartouches de médicament et la préparation des ordonnances ;
La figure 8 montre en perspective la main du robot représentée sur la figure 7 ;
La figure 9 illustre les mouvements de la main du robot représentée sur les figures 7 et 8 pour prendre une ou plusieurs doses de médicament sur une bande disposée dans une cartouche rangée dans un logement, la bande étant montrée en vue de face ; et
La figure 10 représente en perspective un second mode de réalisation d'un dispositif de conditionnement des doses unitaires de médicament d'une ordonnance.

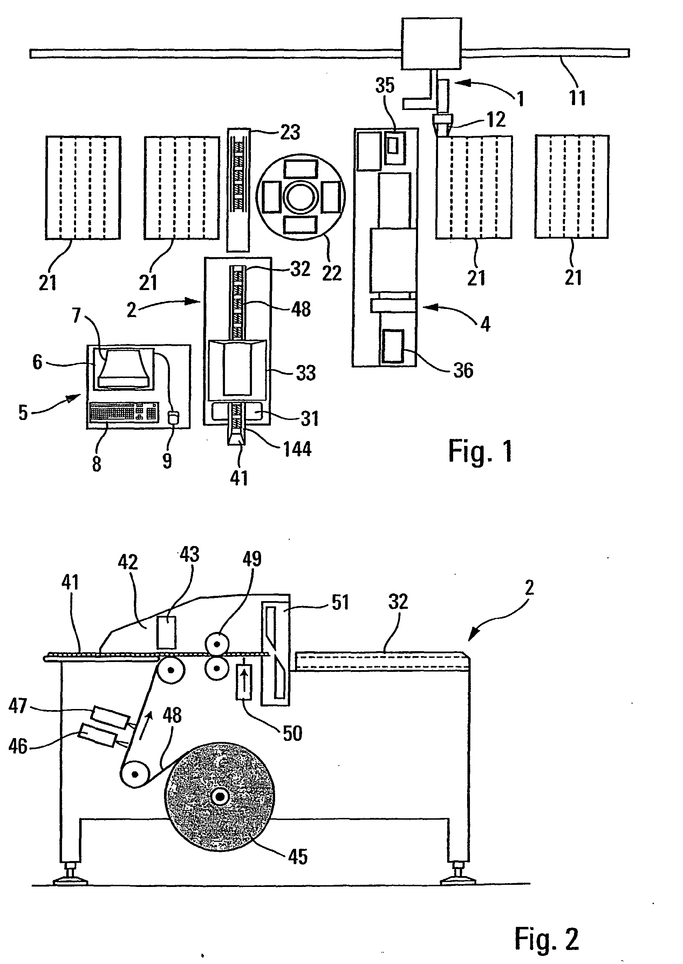

Le système représenté sur la figure 1 comprend un poste de pré-conditionnement et de chargement de médicaments 2, un poste de rangement comprenant plusieurs unités de stockage 21 des médicaments en vue de leur utilisation pour la préparation des ordonnances, et un poste de conditionnement 4 des prises de médicaments sélectionnées pour la préparation des ordonnances, la manutention des médicaments entre les différents postes étant assurée par un robot 1 qui peut par exemple se déplacer le long d'un rail 11.

Le robot 1 comprend une main 12 par exemple à six degrés de liberté.

L'ensemble du système est piloté par un calculateur 5 relié à un terminal de commande 6 comprenant un écran 7 et des organes de commande tels qu'un clavier 8 et une souris 9. Le calculateur 5 est de préférence relié à un réseau de transmission de données pour recevoir notamment les ordonnances informatisées à traiter, et pour transmettre à d'autres unités de gestion des informations concernant notamment l'état de ses stocks de médicament et les ordonnances traitées.

D'après le procédé selon l'invention, les médicaments à introduire dans le système peuvent se présenter sous la forme de comprimés conditionnés sous la forme de plaquettes, par exemple en polyéthylène, comprenant une alvéole respective pour chaque comprimé ou dose unitaire de médicament, les alvéoles étant refermées par un film, par exemple en aluminium, qui peut être facilement percé pour faire sortir un comprimé d'une alvéole, en écrasant l'alvéole en appuyant sur le comprimé. De telles plaquettes peuvent également être formées de deux feuilles d'aluminium entre lesquelles sont disposés les comprimés qui sont séparés les uns des autres par des lignes de soudure entre les deux feuilles, ces lignes de soudure délimitant les alvéoles. Chaque alvéole constitue le conditionnement primaire d'une dose unitaire de médicament. Les plaquettes sont conditionnées dans des boîtes, par exemple en carton.

Les plaquettes de comprimés sont retirées de leur boîte et introduites par un opérateur dans le poste de chargement des médicaments 2 par une ouverture 31 prévue à cet effet, plusieurs plaquettes d'un même médicament et d'un même lot étant fixées entre elles par un film en bande dans une unité de pré-conditionnement 33, cette bande étant ensuite disposée dans les rainures d'une cartouche de forme allongée et de largeur correspondant sensiblement à celle de la bande. Une fois remplie, la cartouche 32 est amenée par un dispositif de convoyage adéquat (non représenté) à un emplacement d'attente 23 où elle peut être prise en charge par le robot 1, pour être rangée dans le moyens de stockage comprenant plusieurs unités de stockage 21 réparties le long du rail 11 de déplacement du robot, chaque unité de stockage 21 comprenant une pluralité de logements accessibles par le robot et conçus pour recevoir une cartouche 32.

Bien entendu, durant la phase de remplissage des unités de stockage 21 par des cartouches 32 chargées de médicaments, le système mémorise les références des médicaments introduits et les logements des unités de stockage 21 dans lesquels ils sont rangés.

Après cette phase préalable de remplissage des unités de stockage 21, le système peut passer à une phase de traitement des ordonnances qu'il reçoit par le réseau de transmission de données.
Cette phase comprend pour chaque médicament de chaque prise de l'ordonnance, l'identification du logement où se trouve le médicament à aller chercher, la commande du robot 1 de manière à positionner la main du robot en regard de l'ouverture du logement précédemment identifié, la préhension par la main du robot de la bande de film pour la tirer hors du logement, la découpe du film par la main du robot pour prendre le nombre de doses prévues dans la prise, le déplacement du robot vers le poste de conditionnement 4 des médicaments de l'ordonnance où les doses de médicament prises par le robot sont déposées.

Selon un premier mode de réalisation de l'invention, les doses de médicaments pour une ordonnance sont conditionnées dans une barquette comprenant une case par prise de médicament, la barquette à remplir étant transférée par le robot 1 d'une unité de stockage 22 de barquettes vides à l'entrée 35 du poste de conditionnement 4 des doses de médicament. La barquette située à l'entrée 35 est ensuite remplie par le robot 1 en fonction des informations figurant dans l'ordonnance en cours de traitement.

L'unité de stockage 22 peut être réalisée comme représenté sur la figure 1, sous la forme d'un plateau tournant circulaire sur lequel sont disposées les barquettes en plusieurs piles.

En fin de traitement de l'ordonnance, la barquette est traitée par le poste de conditionnement 4 où elle est refermée par exemple par un film, puis amenée à un emplacement de sortie 36 où elle peut être emportée vers le patient à qui elle est destinée.

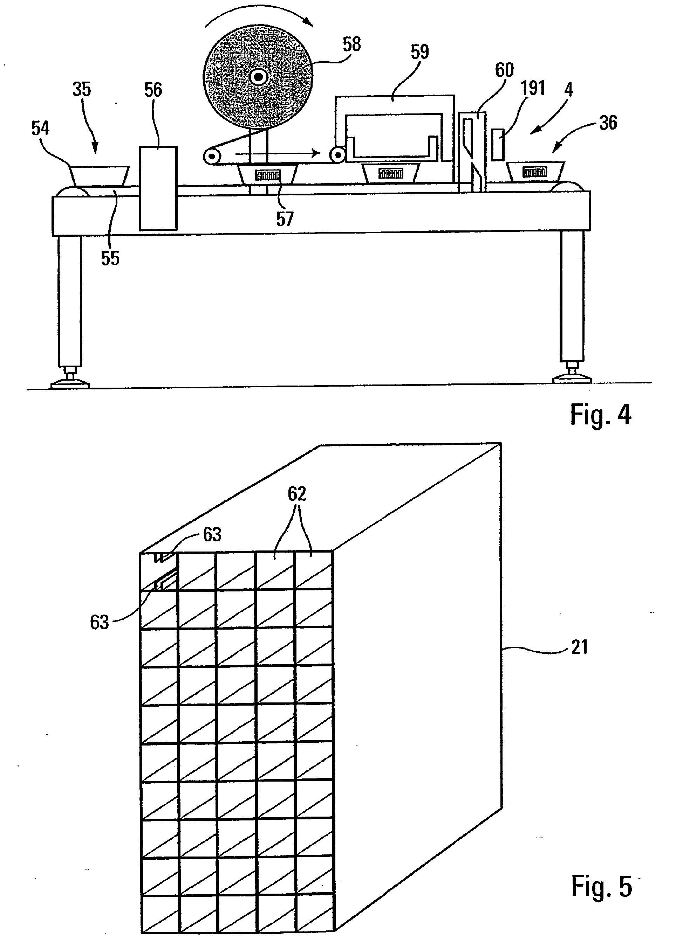

Tel que représenté plus en détail sur la figure 2, le poste de chargement 2 comprenant un dispositif d'introduction 41 des médicaments, qui peut comprendre un convoyeur sensiblement horizontal, sur lequel l'opérateur dépose les plaquettes 144 de comprimés 142, le convoyeur amenant les plaquettes dans une unité 42 de dépose sur film en bande 48 des plaquettes (figure 3).
L'introduction des médicaments dans l'unité 42 peut également être effectuée manuellement par l'opérateur, ou par un manipulateur qui peut également effectuer le retrait des plaquettes de médicament de leurs boîtes.

L'unité 42 comprend une réserve 45 de film en bande enroulé en bobine, la bande de film 48 provenant de cette réserve passant tout d'abord devant un dispositif de découpe 46, par exemple à laser, commandé par le calculateur 5 pour réaliser d'une part, des perforations de contrôle d'avance 81 de la bande de même forme, par exemple rectangulaire et uniformément répartis le long d'au moins un bord de la bande, de préférence, le long des deux bords de la bande, et d'autre part, des perforations 82, destinées à recevoir respectivement les alvéoles 141 des plaquettes 144 de médicament à charger (voir figures 3, 6 et 9). Ces perforations 82 pour alvéoles ont donc une forme, des dimensions et des positions respectives correspondant à celles des alvéoles des plaquettes du médicament à charger. Une fois perforée, la bande 48 passe devant une unité d'encollage 47 qui applique un adhésif 145 sur une face de la bande, la bande étant ensuite amenée au niveau du convoyeur 41 pour recevoir les plaquettes introduites par l'opérateur ou un autre système automatisé.

Pour la commande du dispositif de découpe 46, le calculateur 5 mémorise pour chaque référence de médicament à distribuer, les dimensions des plaquettes et la position et les dimensions des alvéoles renfermant les doses unitaires, ainsi que les lignes de découpe possibles permettant de séparer individuellement chaque dose unitaire de la plaquette. Ces informations peuvent être introduites manuellement par un opérateur, ou détectées et mesurées optiquement par une caméra ou un scanner et un système de reconnaissance de formes.

La largeur de la bande 48 à utiliser est avantageusement choisie de manière à être supérieure à la largeur de toutes les plaquettes de médicaments susceptibles d'être distribuées, et reste constante quelles que soient les dimensions de la plaquette à traiter.

Bien entendu, on peut alternativement utiliser une bande de film autocollant, ce qui rend inutile l'unité d'encollage 47.

Parallèlement, les plaquettes 144 passent devant un lecteur optique 43 permettant de lire notamment un code à barre d'identification du médicament, le code lu étant transmis au calculateur 5. Puis, les plaquettes sont appliquées sur la bande 48 en passant entre deux rouleaux 49 d'entraînement, la face où sont formées les alvéoles 141 étant tournée vers la bande 48, les alvéoles 141 des plaquettes 144 s'engageant dans les perforations 82 de la bande 48 (figure 3). La bande avec les plaquettes collées dessus passe ensuite par une unité d'impression 50 qui imprime sur chaque alvéole passant au travers de la bande 48, le code à barres lu par le dispositif optique 43, et de préférence la désignation en clair du médicament fournie par le calculateur 5 en fonction du code à barres lu. La bande 48 supportant les plaquettes de médicament collées, est ensuite introduite dans une cartouche 32 en attente à un emplacement de sortie du poste de conditionnement 2, en passant par une unité de découpe 51 commandée par le calculateur 5 et prévue pour découper la bande en un tronçon à la longueur de la cartouche.

Durant l'introduction des plaquettes, le calculateur 5 vérifie par le code à barres lu sur chaque plaquette introduite, que les plaquettes chargées sur une même cartouche 32 correspondent au même médicament et à un même lot. Si tel n'est pas le cas, le calculateur arrête le convoyeur et affiche un message d'erreur sur l'écran 7.

On peut prévoir également que l'opérateur dépose directement les plaquettes sur la face encollée de la bande préalablement découpée, en engageant les alvéoles des plaquettes dans les perforations 82. Cette opération peut également être effectuée par un robot manipulateur conçu à cet effet.

Grâce aux perforations 81, 82, on est assuré que les plaquettes de médicament occupent toujours la même position sur la bande, ce qui garantit que les alvéoles ne risqueront pas d'être découpées lors de la préparation des prises de médicaments prévues dans les ordonnances.
La présence des perforations 82 permet également de vérifier que les positions et dimensions respectives des alvéoles des plaquettes correspondent exactement à celles des perforations, ce qui constitue un contrôle supplémentaire de l'identification du médicament.
Il convient de remarquer que les plaquettes sont collées sur la bande 48 du côté des alvéoles 141, ce qui laisse non recouverts les faces extérieures des alvéoles et le film d'operculage 143 en aluminium, et d'une manière générale les parois des plaquettes qui sont en contact avec les comprimés. Il en résulte que la bande ne perturbe pas le retrait des doses unitaires 142 de leur plaquette.

Bien entendu, l'étape de collage des plaquettes 144 de médicament sur une bande n'est pas nécessaire si les plaquettes se présentent déjà sous la forme de bandes.

La figure 4 qui montre un premier mode de réalisation d'un poste de conditionnement 4 des doses unitaires des ordonnances. Sur cette figure, le poste de conditionnement reçoit à son emplacement d'entrée 35 une barquette 54 qui est remplie par le robot 1. Une fois remplie, la barquette est déposée par le robot sur un convoyeur 55 horizontal, puis est entraînée dans une unité d'étiquetage 56 qui appose une étiquette d'identification du contenu de la barquette, préalablement imprimée, par exemple sur une face latérale de la barquette. La barquette est ensuite amenée à une unité de thermo-scellage 59 où elle est fermée par un film d'operculage, cette unité étant alimentée en film par une bobine 58, le film étant ensuite coupé à la longueur de la barquette par une unité de découpe 60. Le convoyeur 55 amène enfin la barquette scellée à un emplacement de sortie 36 où elle peut être emportée au patient à qui sont destinés les médicaments de la barquette.

On peut également prévoir une unité d'impression 191 supplémentaire qui imprime sur le film d'operculage, l'identification du patient et en regard de chaque case de la barquette correspondant à une prise de médicaments, le moment préconisé de la prise et la désignation et le nombre de doses unitaires des médicaments contenus dans la case.

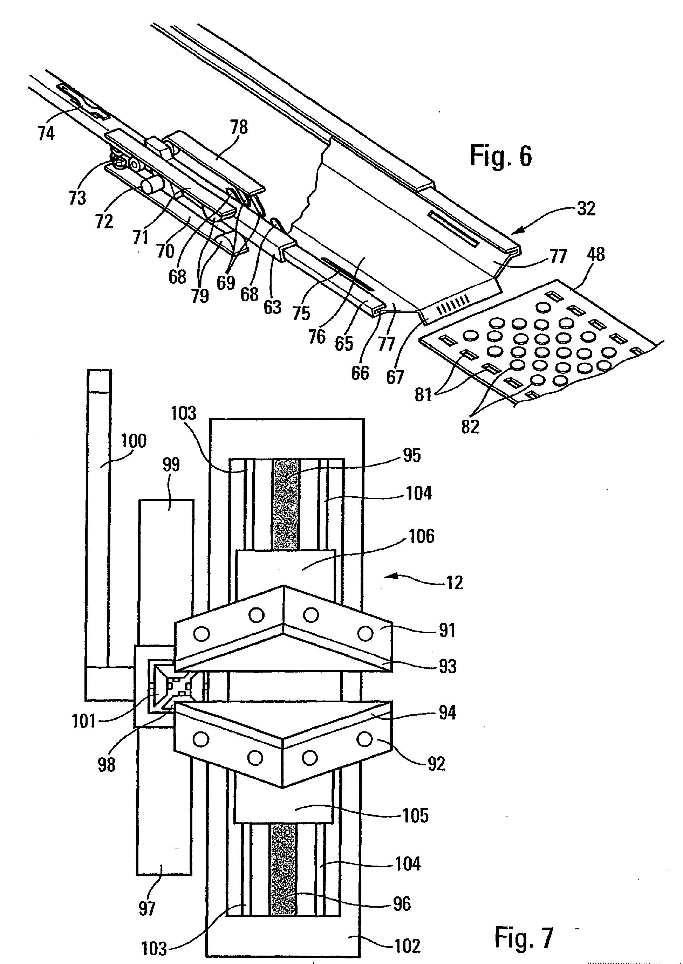

La figure 5 représente une unité de stockage 21, laquelle comporte une pluralité de logements 62, répartis sur plusieurs étages. Chaque logement présente des dimensions correspondant à celle d'une cartouche 32 et comporte deux glissières 63 en regard l'une de l'autre, dans lesquelles s'engage un profil 65 de forme complémentaire prévu sur chaque cartouche 32 (figure 6). Ces glissières peuvent être fixées aussi bien sur les parois latérales du logement, que sur les parois supérieure et inférieure de celui-ci, comme représenté sur la figure 5.

On peut également envisager une unité de stockage sans parois de séparation des logements 62, mais uniquement avec un châssis de fixation des glissières 63 respectives de chaque logement.

Sur la figure 6, la cartouche 32 présente un profil sensiblement en forme de U avec un plateau de base 76 prolongé par des parois latérales 77 très évasées dont les bords respectifs sont recourbés pour former des glissières 66 en regard l'une de l'autre, le profil extérieur de ces glissières formant le profil complémentaire 65 prévu pour s'engager dans les glissières 63 d'un logement 62 d'une unité de stockage 21. Les glissières 66 sont prévues pour recevoir les bords longitudinaux d'une bande 48 de support de plaquettes de médicaments, l'écartement entre les deux glissières 66 correspondant donc à la largeur de la bande 48. Le bord antérieur du plateau de base 76 de la cartouche est prolongé par une plaque d'identification 67 s'étendant, sensiblement perpendiculairement au plateau de base 76, vers l'extérieur du profil en U évasé de la cartouche, cette plaque étant destinée à recevoir une étiquette sur laquelle est imprimé notamment le code à barres correspondant au médicament supporté par la bande 48 engagée dans la cartouche 32.

Une des parois latérales 77 comporte une fente 75 longitudinale qui est prévue pour permettre le passage de quatre doigts de maintien 68, 69 disposés de manière à s'engager dans respectivement quatre perforations de contrôle d'avance 81, consécutives d'une bande 48 engagée dans la cartouche 32.
La longueur de la fente 75 correspond à l'espacement entre les deux doigts 68 les plus espacés des quatre doigts 68, 69. La combinaison de la fente 75 et des doigts 68 permet donc de garantir que la cartouche 32 occupe toujours la même position dans un logement 62 lorsque les doigts sont engagés dans la fente.
En outre, la position des perforations 82 étant repérée par rapport à la position des perforations 81, la présence des doigts 68, 69 engagés dans les perforations 81 permet de repérer sans risque d'erreur la position des alvéoles sur la bande. Ces doigts permettent également de garantir que les alvéoles de la bande dans le logement 62 occupent toujours une même position prédéterminée par rapport au bord de l'ouverture du logement.

Les doigts 68 d'une part, et 69 d'autre part sont respectivement fixés sur les faces en regard de deux bras 78 respectifs disposés parallèlement aux glissières 63 et dont une extrémité est montée pivotante, respectivement de part de d'autre d'une des glissières 63. De cette manière les bras 78 peuvent pivoter entre une position resserrée où les doigts 68, 69 sont engagés à la fois dans la fente 75 de la cartouche et dans les perforations de contrôle d'avance 81 de la bande 48, une position de retrait de la bande où les doigts 68 les plus espacés sont engagés uniquement dans la fente 75 de la cartouche, les doigts 68, 69 étant complètement dégagés des perforations 81, et une position de chargement ou de déchargement de la cartouche où les doigts sont complètement dégagés de la fente 75 et des perforations 81.
Le pivotement des bras 78 et donc l'écartement des doigts 68, 69 est commandé par une pince comportant deux bras 70, 71 pivotant autour d'axes 72 et dont l'écartement lié à celui des bras 78, les deux bras 70, 71 de la pince étant ramenés en position resserrée par un ressort 73.
Les parties d'extrémité en regard des deux bras 70, 71 comportent un bossage 79 respectif facilitant l'introduction d'un objet entre les bras de la pince en vue de leur écartement.

Bien entendu, les doigts 68, 69 peuvent être remplacés par un système de roues dentées conformées et disposées de manière à coopérer avec les perforations 81.

On peut prévoir également un dispositif de rattrapage de jeu 74 assurant le maintien de la cartouche 32 dans les glissières 63 de son logement 62, pendant l'avance de la bande 48, les doigts 68, 69 étant alors désengagés de la fente 75, et pendant la découpe de la bande.

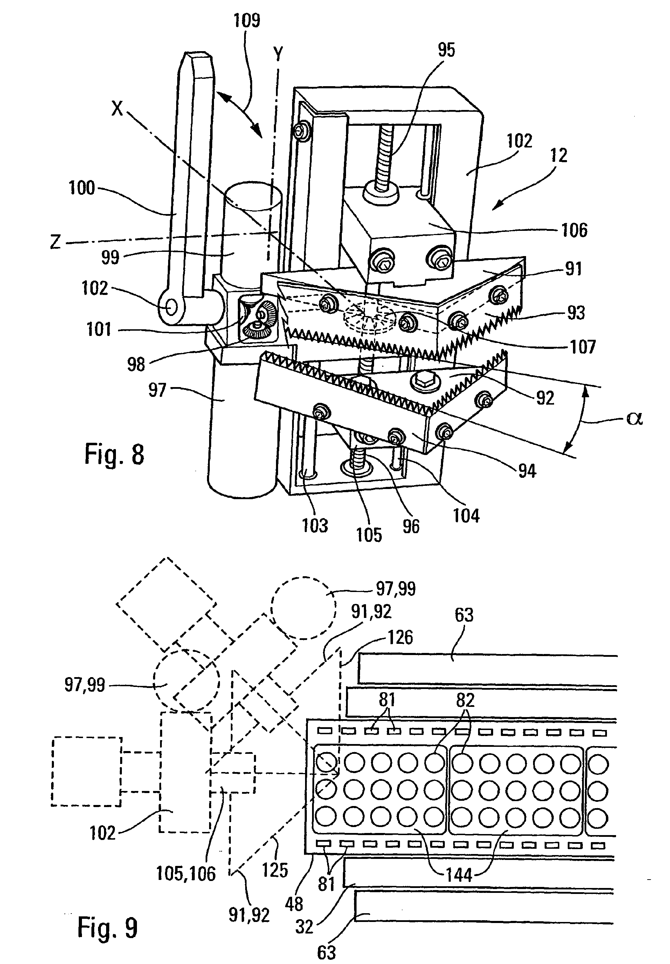

Sur les figures 7 et 8, la main du robot comprend une mâchoire formée de deux demi mâchoires 91, 92 de formes sensiblement identiques, chaque demi mâchoire comprenant une paroi de base de forme triangulaire ayant deux chants formant un angle compris entre 45° et 135°, de préférence à 90°. Ces chants supportent une lame tranchante 93, 94 en saillie, constituée de deux parties rectilignes formant également entre elles une pointe présentant un angle compris entre 45° et 135°, de préférence égal à 90°. Les lames sont fixées aux chants des parois de base des demi mâchoires par exemple au moyen de vis.

Les deux demi mâchoires sont montées en regard l'une de l'autre de manière à ce que les lames 93, 94 respectives des deux demi mâchoires puissent coopérer l'une avec l'autre pour réaliser des découpes par effet de ciseaux. A cet effet, les demi mâchoires sont montées sur un support respectif 105, 106 mobile entre deux positions, à savoir une position dans laquelle les demi mâchoires sont écartées et une position serrée dans laquelle les lames respectives des demi mâchoires se chevauchent. En particulier, les lames 93, 94 comportent chacune deux faces parallèles et un bord tranchant en biseau dont le filet tranchant vient glisser contre l'autre lame lorsque les demi mâchoires se chevauchent.

Les demi mâchoires sont montées sur les supports 105, 106 de manière à ce que les plans contenant respectivement les filets tranchants des lames 93, 94 forment entre eux un angle ouvert α non nul (voir figure 8). Du fait que cet angle α est non nul, la découpe réalisée par les demi mâchoires est progressive en allant vers la pointe des lames 93, 94. Il en résulte que l'effort à exercer sur celles-ci pour découper une plaquette et la bande 48 sur laquelle cette dernière est collée, est sensiblement constante.

Pour réduire cette force de serrage, on peut prévoir d'utiliser des lames 93, 94 dentelées d'une manière continue, la découpe étant alors réalisée par effet de perforation par les pointes des dents, et de tranchage par les arêtes inclinées des dents.
Les dents des lames et les espaces entre deux dents sont de préférence de forme triangulaire et présentent des arêtes biseautées.

La hauteur des dents et l'angle α sont déterminés de manière à ce que trois ou quatre dents soient engagées pendant une découpe dans la bande 48 et une plaquette, ce qui permet d'éviter que la bande s'échappe des demi mâchoires lorsqu'elles sont resserrées.

Les supports 105, 106 sont par exemple montés sur deux vis sans fin 95, 96 respectives, à pas contraires et coaxiales, entraînées par un moteur 97 par l'intermédiaire d'une transmission à deux renvois d'engrenages 98, 107 à 90°, de manière à ce que les demi mâchoires 91, 92 montées sur leur support respectif 105, 106 se rapprochent ou s'éloignent l'une de l'autre en fonction du sens de rotation du moteur 97.

Les vis sans fin 95, 96 sont montées dans un châssis 102 en forme de cadre rectangulaire supportant également deux tiges 103, 104 de guidage des supports 105, 106, ces deux tiges étant parallèles aux vis 95, 96.

Par ailleurs, la main 12 du robot comprend un autre moteur 99 permettant d'actionner un bras de commande 100 par l'intermédiaire d'une autre transmission avec renvoi d'engrenages à 90° 101, ce bras pivotant dans un plan perpendiculaire au plan du cadre 102 (suivant la flèche 109 sur la figure 8), pour prendre soit une position inactive, soit une position active perpendiculaire au plan du cadre 102 dans laquelle il peut s'engager entre les bras 70, 71 (figure 6) de manière à écarter les doigts 68, 69, permettant l'avance et l'extraction de la bande 48 par la mâchoire 91, 92, en vue du prélèvement de doses unitaires de médicament, ou de la cartouche 32 en vue de son rechargement. Il est à noter que l'écartement des doigts 68, 69 est commandé par le robot en fonction de la profondeur d'engagement du bras 100 entre les bras 70, 71 de la pince de commande des doigts.

Pour chaque prise et référence de médicament figurant dans l'ordonnance à traiter, le calculateur 5 recherche le logement 21 où se trouve la référence du médicament et commande le robot 1 pour qu'il se place devant le logement ainsi déterminé. Arrivé devant ce logement, le robot lit le code d'identification figurant sur la plaque 67 de la cartouche 32 se trouvant dans le logement, de manière à contrôler que le médicament recherché se trouve bien dans la cartouche. Si tel est le cas, la main du robot est commandée de manière à occuper successivement les positions 125, 126 montrées en traits interrompus sur la figure 9 par rapport à la cartouche 32, et en particulier, par rapport aux alvéoles de conditionnement de doses unitaires de médicament sur la bande 48 située dans la cartouche.

Pour prendre une ou plusieurs doses unitaires de médicament dans une cartouche 32, la main du robot occupe tout d'abord une position dans laquelle elle fait face à la bande 48, les demi mâchoires étant écartées l'une de l'autre. La main du robot est ensuite rapprochée de la bande 48, de manière à ce que celle-ci se trouve entre les pointes des demi mâchoires 91, 92, celles-ci étant alors resserrées pour pincer la bande. Dans cette position, la force de pincement de la mâchoire du robot est contrôlée et maîtrisée de manière à ne pas écraser les médicaments ou couper la bande.

Dans cette position de la main du robot, le bras 100 écarte les doigts 68, 69 de manière à libérer la bande 48. La main du robot s'écarte de l'unité de stockage 21 d'une distance juste suffisante pour dégager une rangée de doses unitaires de la cartouche 32, pour atteindre la position 125 sur la figure 9, tandis que la cartouche est maintenue dans son logement par le dispositif de rattrapage de jeu 74. La distance d'extraction de la bande de son logement est déterminée par le calculateur en fonction de la taille des alvéoles et du nombre de doses unitaires à prélever, cette distance étant égale à un nombre entier fois le pas d'espacement de deux perforations 81 consécutives.

Bien entendu, il convient de prévoir que les tronçons de bande 48 dans leur logements 62 respectifs comportent une portion d'extrémité sans plaquette, de manière à permettre le maintien de la bande dans sa cartouche 32 jusqu'au prélèvement de la dernière dose unitaire de la bande.

La mâchoire 91, 92 du robot est ensuite desserrée et la main du robot pivote pour atteindre la position 126 dans laquelle les lames 93, 94 de la mâchoire sont respectivement parallèles aux bords latéraux et d'extrémité de la bande 48, et en regard d'une ligne ne traversant pas d'alvéoles. La mâchoire du robot est alors serrée avec une force suffisante pour découper la bande 48 et séparer ainsi une ou plusieurs doses unitaires de médicament.
Le nombre de doses prélevées est bien entendu mémorisé par le calculateur 5 de manière à pouvoir déterminer, lors du prélèvement suivant dans le même logement 62, la configuration de la découpe à réaliser en fonction du nombre de doses unitaires à prélever.

La figure 9 fait apparaître que la forme en angle droit des demi mâchoires selon l'invention permet de réaliser des découpes qui sont particulièrement adaptées à séparer des comprimés disposés en rangées ou en quinconce dans leurs plaquettes, la mâchoire pouvant prendre n'importe quelle inclinaison entre 0 et 90° dans le plan de la figure 9.
Il est à noter que, lorsque les demi mâchoires sont serrées, elles forment un réceptacle, de préférence fermé, dans lequel les doses unitaires de médicament découpées tombent et peuvent être transportées jusqu'au poste de conditionnement 4, sans risque de tomber.

On peut avantageusement faire pivoter la tête du robot vers le bas pour que les doses de médicaments ainsi séparées ne risquent pas de tomber hors de la mâchoire, durant leur transport. Arrivé au-dessus de la case de la barquette à remplir, la main du robot pivote autour d'un axe horizontal X, jusqu'à ce que les demi mâchoires soient dans une position verticale (vis 95, 96 horizontales), puis vers le haut autour d'un axe Z horizontal situé dans le plan du cadre 102, de manière à faire tomber les médicaments contenus dans la mâchoire par l'arrière de celle-ci.

Selon une variante de l'invention, la barquette est avantageusement embarquée par le robot, par exemple sur une plate-forme solidaire du robot, prévue à cet effet, de manière à pouvoir être remplie par le robot au niveau des unités de stockage 21, ce qui permet d'éviter au robot de se déplacer vers l'emplacement 35 à la suite de chaque prélèvement de doses unitaires de médicament. Il en résulte un gain de temps dans le traitement des ordonnances.

Par ailleurs, les ampoules et petits flacons peuvent être introduits directement par un opérateur dans des logements 21 respectifs prévus à cet effet, ces logements comportant par exemple un plan incliné sur lequel sont disposés les ampoules ou flacons, de manière à ce qu'un flacon ou une ampoule soit toujours présent à proximité de l'ouverture du logement pour que la main du robot puisse le prendre dans sa mâchoire. Il est à noter que dans le cas de flacons en matière plastique liés entre eux par une languette dans la même matière, la main du robot est capable de découper cette languette pour en séparer un flacon des autres et le garder dans le réceptacle.

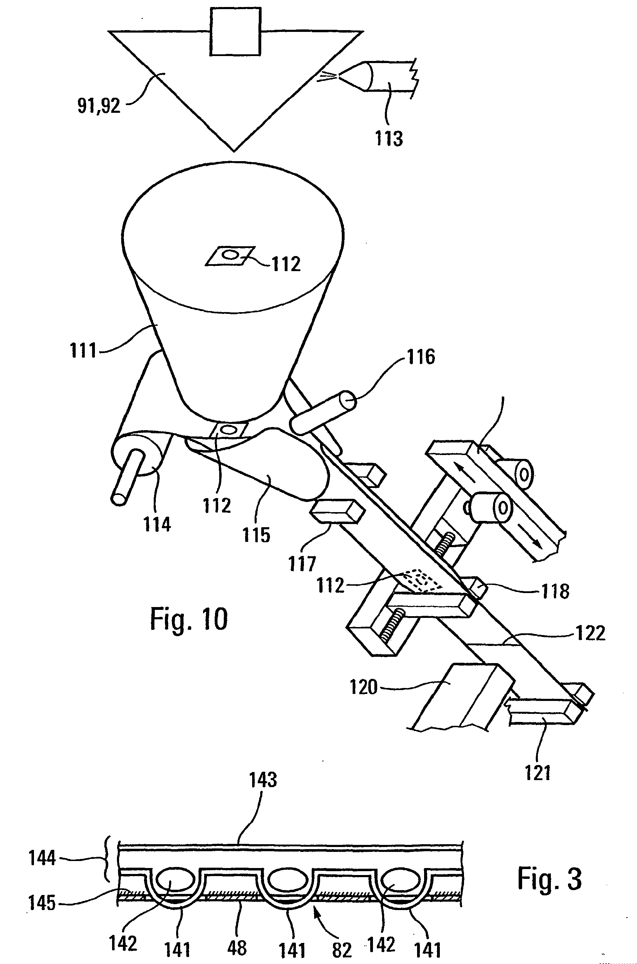

La figure 10 représente un autre mode de réalisation d'une unité de conditionnement de prises d'une ordonnance. Au lieu de conditionner les médicaments en barquette, cette unité réalise des sachets. A cet effet, elle comprend un premier entonnoir 111 sensiblement vertical, dans lequel la main 12 du robot laisse tomber les doses unitaires de médicament 112, cet entonnoir débouchant sur un film en bande provenant d'une bobine 114 et passant dans un second entonnoir 115, un dispositif 116 de contrôle étant prévu pour vérifier que le médicament tombe dans l'entonnoir 115, de manière à retenir les doses 112 provenant du premier entonnoir 111. On peut prévoir un dispositif de soufflage 113 permettant de décoller une dose de médicament qui resterait collée sur les dents des lames 93, 94.

Le film en bande sort du second entonnoir, plié longitudinalement, ses bords étant situés vers le haut et passe ensuite dans un dispositif de thermo-soudage 117 pour souder les bords du film de manière à former un tube renfermant les doses unitaires 112. Le film passe ensuite entre les pinces d'une mâchoire thermo-soudante 118 réalisant des soudures de séparation 122 entre les prises de médicament, cette mâchoire étant montée sur un support entraîné dans un mouvement de va et vient par un dispositif 119, de manière à tirer le film sur une distance correspondant à l'espace entre deux soudures de séparations 122. Puis, le film formant des poches passe devant une unité 120 d'impression d'informations d'identification, et enfin entre les pinces d'une mâchoire de découpe 121 pour découper le film lorsque toutes les prises de médicament prescrites dans l'ordonnance sont passées entre celles-ci.

Bien entendu, au lieu d'être fabriqué à partir d'un film unique, le sachet peut être obtenu par d'autres procédés, comme par exemple à partir de deux films qui peuvent être de natures différentes.

On peut prévoir également d'autres modes de conditionnement sans s'écarter du concept de l'invention qui vient d'être décrit.

A des fins d'identification des préparations d'ordonnances et des médicaments figurant dans ces préparations, on peut également prévoir d'utiliser une puce d'identification fixée dans le fond de la barquette ou sur le bord du sachet, cette puce étant accessible en lecture et en écriture au moyen d'une unité émettrice /réceptrice fixe ou portable. De cette manière, le personnel de soins hospitaliers peut à l'aide d'une unité émettrice / réceptrice vérifier le contenu de la préparation par rapport à l'ordonnance et l'identification du patient, et ajouter toute information nécessaire, par exemple à destination de l'équipe de soins suivante, et ce sans risque de dégradation de l'emballage.

## Revendications

1. Procédé pour la préparation automatique des prises de médicaments d'un patient, à partir d'une ordonnance informatisée prescrivant des médicaments déterminés pendant une période définie, en un nombre déterminé de prises, les médicaments étant emballés dans leur conditionnement primaire d'origine se présentant sous la forme de plaquettes (144) rassemblant chacune dans des alvéoles (141) respectives un nombre prédéterminé de doses unitaires (142) d'un même médicament,
**caractérisé en ce qu'**il comprend une phase préalable de stockage des médicaments dans leur conditionnement primaire d'origine, cette phase préalable comprenant les étapes suivantes pour chaque médicament à stocker :
- l'identification de la référence du médicament,
- l'introduction et la mémorisation des emplacements respectifs sur la plaquette des doses unitaires du médicament,
- le pré-conditionnement des plaquettes en bandes,
- le rangement des bandes supportant le médicament dans une unité de stockage (21) et
- la mémorisation de l'emplacement de stockage du médicament en association avec l'identification de la référence du médicament.

2. Procédé selon la revendication 1,
**caractérisé en ce que** plusieurs plaquettes d'un même médicament provenant d'un même lot sont fixées sur une bande (48).

3. Procédé selon la revendication 2,
**caractérisé en ce** la bande (48) est préalablement munie de perforations (82) destinées à recevoir respectivement les alvéoles des plaquettes de médicament.

4. Procédé selon l'une des revendications 1 à 3,
**caractérisé en ce que** le traitement d'une ordonnance comprend les étapes suivantes pour chaque prise de l'ordonnance, et pour chaque référence de médicament de la prise :
- la détermination de l'emplacement de stockage où se trouve le médicament à rechercher,
- la détermination du nombre de doses unitaires du médicament de la prise,
- la préhension de la bande (48) de médicament recherchée pour la retirer partiellement de son emplacement sur une certaine longueur en fonction du nombre de doses unitaires à prendre,
- le découpage de la bande pour en séparer le nombre de doses unitaires prescrit par l'ordonnance, en tenant compte des emplacements respectifs des doses unitaires du médicament sur la bande (48), et
- la disposition des doses unitaires découpées dans un emballage prévu à cet effet, dans lequel chaque prise est séparée des autres prises.

5. Procédé selon l'une des revendications 1 à 4,
**caractérisé en ce qu'**il comporte également une étape d'impression sur l'emballage ainsi réalisé d'informations permettant d'identifier le patient à qui sont destinés les médicaments ainsi rassemblés, et pour chaque prise, les médicaments de la prise en association avec l'indication du moment auquel la prise doit être effectuée.

6. Procédé selon l'une des revendications 1 à 5,
**caractérisé en ce que** les médicaments de chaque ordonnance sont disposés dans une barquette (54) respective comportant plusieurs cases, chacune étant destinée à recevoir une prise respective, les cases de la barquette étant refermées hermétiquement en fin de préparation de l'ordonnance par un film (58).

7. Procédé selon l'une des revendications 1 à 5,
**caractérisé en ce que** les médicaments de chaque ordonnance sont déposés dans une poche, les médicaments de chaque prise étant séparés de ceux des autres prises.

8. Procédé selon l'une des revendications 1 à 7,
**caractérisé en ce que** les bandes (48) de médicament sont découpées en tronçons supportant une même référence de médicament, ces tronçons étant disposés dans des cartouches (32) qui sont rangées respectivement dans les logements (62) des unités de stockage (21) poste de stockage (3), un code d'identification du médicament étant apposé sur la cartouche.

9. Système pour la préparation automatique des prises de médicaments d'un patient, à partir d'une ordonnance informatisée prescrivant des médicaments déterminés pendant une période définie, en un nombre déterminé de prises, les médicaments étant emballés dans leur conditionnement primaire d'origine se présentant sous la forme de plaquettes (144) rassemblant chacune dans des alvéoles (141) respectives un nombre prédéterminé de doses unitaires (142) d'un même médicament, à raison d'une dose unitaire par alvéole, **caractérisé en ce qu'**il comprend :
- des moyens de chargement et de pré-conditionnement (2) des médicaments, configurés pour charger les dits médicaments, dans leur conditionnement primaire d'origine en plaquettes, et pour pré-conditionner les dits médicaments en bandes (48), chaque bande regroupant plusieurs plaquettes,
- des unités moyens de stockage (21) des médicaments, conçus pour recevoir les plaquettes (144) de médicament pré-conditionnées en bandes (48),
- des moyens de préhension et de prélèvement des médicaments prescrits par une ordonnance,
- des moyens de conditionnement (4) des médicaments de chaque prise prescrite par une ordonnance, et
- un calculateur (5) recevant les ordonnances, et assurant, en fonction des informations figurant sur ces ordonnances, la commande et la gestion des dits moyens de chargement et de pré-conditionnement (2), des dits unités de stockage (21), des dits moyens de prélèvement, et des dits moyens de conditionnement (4).

10. Système selon la revendication 9, **caractérisé en ce que** les moyens de pré-conditionnement (2) des plaquettes de médicament en bandes comprennent des moyens (47) pour fixer les plaquettes de médicament sur un film en bandes (48).

11. Système selon la revendication 10, **caractérisé en ce que** les moyens de pré-conditionnement (2) comprennent un poste de découpe des bandes (48) conçu pour y réaliser des perforations (82) destinées à recevoir respectivement des alvéoles (141) des plaquettes (144) de médicament à stocker, et des perforations (81) de contrôle d'avance de la bande.

12. Système selon la revendication 11,**caractérisé en ce que** pour réaliser les perforations (82) et les découpes de séparation des doses unitaires de médicament, le calculateur (5) comprend des moyens pour mémoriser pour chaque référence de médicament à distribuer, les dimensions des plaquettes et la position et les dimensions des alvéoles renfermant les doses unitaires des plaquettes, ainsi que les lignes de découpe possibles permettant de séparer individuellement chaque dose unitaire des plaquettes.

13. Système selon la revendication 12, **caractérisé en ce qu'**il comprend des moyens de détection optique et de reconnaissance de forme pour déterminer les dimensions des plaquettes et la position et les dimensions des alvéoles renfermant les doses unitaires des plaquettes, ainsi que les lignes de découpe possibles permettant de séparer individuellement chaque dose unitaire des plaquettes.

14. Système selon l'une des revendications 9 à 13,**caractérisé en ce que**
les moyens de prélèvement comprennent un robot (1) assurant la manutention des médicaments entre les dits moyens de chargement et de pré-conditionnement (2), les dits unités de stockage (21), et les dits moyens de conditionnement (4), ce robot comportant des moyens (93, 94) pour découper le film (48) et les plaquettes de médicaments collées dessus, de manière à en séparer au moins une dose unitaire de médicament.

15. Système selon l'une des revendications 9 à 14, **caractérisé en ce que** les moyens de prélèvement comprennent une main (12) comportant une mâchoire formée de deux demi mâchoires (91, 92) supportant chacune une lame (93, 94) constituée de deux parties rectilignes formant un angle compris entre 45° et 135°, de préférence égal à 90°.

16. Système selon la revendication 15, **caractérisé en ce que** la mâchoire (91, 92) forme un réceptacle destiné à recevoir les doses unitaires de médicament découpées en vue de les transporter jusqu'au poste (4) de conditionnement des prises.

17. Système selon la revendication 15 ou 16, **caractérisé en ce que** les lames (93, 94) respectives des demi mâchoires (91, 92) sont fixées et actionnées de manière à coopérer l'une par rapport à l'autre soit à la manière de ciseaux pour découper la bande (48) et une plaquette (144), soit à la manière de pinces pour pouvoir tirer une bande hors de son logement, ou serrer un objet tel qu'une ampoule ou un flacon.

18. Système selon l'une des revendications 15 à 17, **caractérisé en ce que** les lames (93, 94) respectives des demi mâchoires (91, 92) sont dentelées.

19. Système selon l'une des revendications 9 à 18, **caractérisé en ce que** les moyens de conditionnement (4) des prises comprennent une unité d'impression (191, 120) pour imprimer en regard de chaque prise le moment et mode préconisés de la prise et la désignation et le nombre de doses unitaires des médicaments de la prise.

20. Système selon l'une des revendications 9 à 19, **caractérisé en ce que** les conditionnements des prises d'une ordonnance comprennent une puce accessible en lecture et en écriture dans laquelle sont enregistrés l'identification du patient à qui est destiné la préparation et pour chaque prise, le moment préconisé de la prise et la désignation et le nombre de doses unitaires des médicaments de la prise.

21. Bande pour la mise en oeuvre du procédé selon l'une des revendications 1 à 8,
**caractérisée en ce qu'**elle comprend des perforations (82) présentant une forme et des positions respectives correspondant à celles des alvéoles (141) d'une plaquette (144) d'un médicament, au moins une plaquette du médicament étant fixée sur la bande (48) de manière à ce que chaque alvéole de la plaquette soit engagée respectivement dans une des perforations (82).

22. Bande selon la revendication 21,
**caractérisée en ce qu'**elle comporte une pluralité des dites perforations (82) en un nombre correspondant à une pluralité de plaquettes (144) du dit médicament, de manière à pouvoir recevoir plusieurs plaquettes du dit médicament.

23. Bande selon la revendication 21 ou 22,
**caractérisée en ce qu'**elle comporte des perforations (81) d'entraînement régulièrement réparties.

24. Robot pour la mise en oeuvre du procédé selon l'une des revendications 1 à 8,
**caractérisé en ce qu'**il comprend une main comportant deux demi mâchoires (91, 92) supportant chacune une lame (93, 94) constituée de deux parties rectilignes formant un angle compris entre 45° et 135°, de préférence égal à 90°.

25. Robot selon la revendication 24,
**caractérisé que** les demi mâchoires (91, 92) définissent avec les lames (93, 94) un réceptacle.

26. Robot selon l'une des revendications 24 et 25,
**caractérisé que** les lames (93, 94) des deux demi mâchoires (91, 92) sont fixées et actionnées de manière à coopérer l'une par rapport à l'autre soit à la manière de ciseaux pour couper notamment une plaquette (144) fixée sur une bande (48), soit à la manière de pinces notamment pour tirer une bande ou serrer des objets tels que des ampoules ou des flacons.

27. Robot selon l'une des revendications 24 à 26,
**caractérisé que** les lames (93, 94) des demi mâchoires (91, 92) sont dentelées.

28. Robot selon l'une des revendications 24 à 27,
**caractérisé que** les lames (93, 94) des demi mâchoires (91, 92) sont actionnées l'une par rapport à l'autre de manière à ce que les plans passant par les filets tranchants des lames forment un angle (α) non nul.

## Claims

1. Method for the automatic preparation of administrations of medicines of a patient, based on a computerized prescription prescribing determined medicines for a defined period, in a determined number of administrations, the medicines being packaged in their original primary packaging in the form of blister packs (144) each containing in respective blisters (141) a predetermined number of individual doses (142) of one and the same medicine,
**characterized in that** it comprises a prior phase of storing the medicines in their original primary packaging, this prior phase comprising the following steps for each medicine to be stored:
- the identification of the reference of the medicine,
- the entry and data storage of the respective locations on the blister pack of the individual doses of the medicine,
- the pre-packaging of the blister packs in strips,
- the storage of the strips supporting the medicine in a storage unit (21), and
- the data storage of the storage location of the medicine in association with the identification of the medicine reference.

2. Method according to Claim 1,
**characterized in that** several blister packs of one and the same medicine originating from one and the same batch are attached to a strip (48).

3. Method according to Claim 2,
**characterized in that** the strip (48) is first furnished with perforations (82) designed to receive respectively the blisters of the medicine blister packs.

4. Method according to one of Claims 1 to 3,
**characterized in that** the processing of a prescription comprises the following steps for each administration of the prescription, and for each medicine reference of the administration:
- the determination of the storage location in which the medicine is to be found,
- the determination of the number of individual doses of the medicine of the administration,
- the taking hold of the required medicine strip (48) in order to partially remove it from its location over a certain length according to the number of individual doses to be taken,
- the cutting of the strip in order to separate from it the number of individual doses prescribed by the prescription, while taking account of the respective locations of the individual doses of the medicine on the strip (48), and
- the placing of the cut individual doses into a package provided for this purpose, in which each administration is separated from the other administrations.

5. Method according to one of Claims 1 to 4,
**characterized in that** it also comprises a step of printing on the packaging thus produced of information making it possible to identify the patient for whom the medicines thus assembled are intended, and for each administration, the medicines of the administration in association with the indication of the time when the administration must take place.

6. Method according to one of Claims 1 to 5,
**characterized in that** the medicines of each prescription are placed in a respective tray (54) comprising several compartments, each being designed to receive a respective administration, the compartments of the tray being hermetically sealed by a film (58) at the end of preparation of the prescription.

7. Method according to one of Claims 1 to 5,
**characterized in that** the medicines of each prescription are placed in a pocket, the medicines of each administration being separated from those of the other administrations.

8. Method according to one of Claims 1 to 7,
**characterized in that** the strips (48) of medicine are cut into sections supporting one and the same medicine reference, these sections being placed in cartridges (32) that are stored respectively in housings (62) of the storage units (21), an identification code of the medicine being affixed to the cartridge.

9. System for the automatic preparation of administrations of medicines of a patient, based on a computerized prescription prescribing determined medicines for a defined period, in a determined number of administrations, the medicines being packaged in their original primary packaging in the form of blister packs (144) each containing in respective blisters (141) a predetermined number of individual doses (142) of one and the same medicine, at the rate of one individual dose per blister, **characterized in that** it comprises:
- means of loading and of pre-packaging (2) the medicines, configured to load the said medicines into their original primary packaging in blister packs, and to pre-package the said medicines in strips (48), each strip containing several blister packs,
- medicine storage units (21) designed to receive the blister packs (144) of medicine pre-packaged in strips (48),
- means of taking hold of and picking the medicines prescribed by a prescription,
- means of packaging (4) the medicines of each administration prescribed by a prescription, and
- a computer (5) receiving the prescriptions and, according to the information appearing on these prescriptions, ordering and managing the said loading and pre-packaging means (2), the said storage units (21), the said picking means, and the said packaging means (4).

10. System according to Claim 9, **characterized in that** the means (2) of pre-packaging the blister packs of medicine in strips comprise means (47) for attaching the medicine blister packs to a film in strips (48).

11. System according to Claim 10, **characterized in that** the pre-packaging means (2) comprise a station for cutting the strips (48) designed to make therein the perforations (82) designed to receive respectively the blisters (141) of the blister packs (144) of medicine to be stored, and the perforations (81) for controlling the movement of the strip.

12. System according to Claim 11, **characterized in that**, to produce the perforations (82) and the cuts for separating the individual doses of medicine, the computer (5) comprises means for data storage for each reference of medicine to be distributed, the dimensions of the blister packs and the position and the dimensions of the blisters enclosing the individual doses of the blister packs, and the possible cut lines making it possible to individually separate each individual dose from the blister packs.

13. System according to Claim 12, **characterized in that** it comprises optical detection and shape recognition means for determining the dimensions of the blister packs and the position and the dimensions of the blisters enclosing the individual doses of the blister packs, and the possible cut lines making it possible to individually separate each individual dose from the blister packs.

14. System according to one of Claims 9 to 13, **characterized in that** the picking means comprise a robot
(1) carrying out the handling of the medicines between the said loading and pre-packaging means (2), the said storage units (21) and the said packaging means (4), this robot comprising means (93, 94) for cutting the film (48) and the medicine blister packs bonded thereupon, in order to separate therefrom at least one individual dose of medicine.

15. System according to one of Claims 9 to 14, **characterized in that** the picking means comprise a hand (12) comprising a jaw formed of two half-jaws (91, 92) each supporting a blade (93, 94) consisting of two rectilinear portions forming an angle lying between 45° and 135°, preferably equal to 90°.

16. System according to Claim 15, **characterized in that** the jaw (91, 92) forms a receptacle designed to receive the cut individual doses of medicine for the purpose of transporting them to the administration packaging station (4).

17. System according to Claim 15 or 16,
**characterized in that** the respective blades (93, 94) of the half-jaws (91, 92) are attached and actuated in order to interact with one another either in the manner of scissors to cut the strip (48) and a blister pack (144), or in the manner of pincers to be able to pull a strip out of its housing, or clamp an object such as a phial or a bottle.

18. System according to one of Claims 15 to 17, **characterized in that** the respective blades (93, 94) of the half-jaws (91, 92) are toothed.

19. System according to one of Claims 9 to 18, **characterized in that** the means (4) for packaging the administrations comprise a printing unit (191, 120) to print opposite each administration the recommended time and method of the administration and the name and number of individual doses of the medicines of the administration.

20. System according to one of Claims 9 to 19, **characterized in that** the packages of administrations of a prescription comprise a chip that can be read and written in which are recorded the identity of the patient for whom the preparation is intended and for each administration, the recommended time of the administration and the name and number of individual doses of the medicines of the administration.

21. Strip for applying the method according to one of Claims 1 to 8, **characterized in that** it comprises perforations (82) having a shape and respective positions corresponding to those of the blisters (141) of a blister pack (144) of a medicine, at least one blister pack of the medicine being attached to the strip (48) so that each blister of the blister pack is engaged respectively in one of the perforations (82).

22. Strip according to Claim 21, **characterized in that** it comprises a plurality of the said perforations (82) in a number corresponding to a plurality of blister packs (144) of the said medicine, in order to be able to receive several blister packs of the said medicine.

23. Strip according to Claim 21 or 22, **characterized in that** it comprises evenly distributed drive perforations (81).

24. Robot for applying the method according to one of Claims 1 to 8, **characterized in that** it comprises a hand comprising two half-jaws (91, 92) each supporting a blade (93, 94) consisting of two rectilinear portions forming an angle lying between 45° and 135°, preferably equal to 90°.

25. Robot according to Claim 24, **characterized in that** the half-jaws (91, 92) define with the blades (93, 94) a receptacle.

26. Robot according to one of Claims 24 and 25, **characterized in that** the blades (93, 94) of the two half-jaws (91, 92) are attached and actuated so as to interact with one another either in the manner of scissors to cut particularly a blister pack (144) attached to a strip (48), or in the manner of pincers particularly to pull a strip or to clamp objects such as phials or bottles.

27. Robot according to one of Claims 24 to 26, **characterized in that** the blades (93, 94) of the half-jaws (91, 92) are toothed.

28. Robot according to one of Claims 24 to 27, **characterized in that** the blades (93, 94) of the half-jaws (91, 92) are actuated relative to one another so that the planes passing through the cutting edges of the blades form a non-zero angle (α).

## Patentansprüche

1. Verfahren für die automatische Präparierung der Medikamentierungen eines Patienten, ausgehend von einem rechnerfähigen Rezept, welches während einer definierten Zeitdauer bestimmte Medikamente in einer bestimmten Anzahl von Einzelgaben vorschreibt, wobei die Medikamente in ihrer Primärverpackung verpackt sind, die sich in Form von Plättchen (144) darstellt, die jede in jeweiligen Blistern (141) eine vorbestimmte Anzahl von Dosiereinheiten (142) ein und desselben Medikaments zusammenhält,
**dadurch gekennzeichnet, dass** dieses eine der Lagerung der Medikamente in ihrer Primärverpackung vorhergehende Phase umfasst, wobei diese vorhergehende Phase für jedes zu lagernde Medikament die folgenden Schritte umfasst:
- die Identifikation des Kennzeichens des Medikaments,
- die Eingabe und Speicherung jeweiliger Orte auf dem Plättchen mit Dosiereinheiten des Medikaments,
- die Vorkonditionierung in Streifen,
- die Anordnung der das Medikament tragenden Streifen in einer Aufbewahrungseinheit (21) und
- die Speicherung des Aufbewahrungsortes des Medikaments zusammen mit der Identifikation des Kennzeichens des Medikaments.

2. Verfahren nach Anspruch 1
**dadurch gekennzeichnet, dass** mehrere Plättchen ein und desselben Medikaments aus ein und derselben Charge auf einem Streifen (48) fixiert werden.

3. Verfahren nach Anspruch 2,
**dadurch gekennzeichnet, dass** der Streifen (48) vorher mit Perforationen (82) versehen wird, die dazu bestimmt sind, jeweils die Blister der Medikamentenplättchen aufzunehmen.

4. Verfahren nach einem der Ansprüche 1 bis 3,
**dadurch gekennzeichnet, dass** die Behandlung nach einem Rezept die folgenden Schritte für jede Rezeptierung und für jedes Medikamentenkennzeichen der Einzelgabe umfasst:
- die Bestimmung des Aufbewahrungsortes, wo sich das zu suchende Medikament befindet,
- die Bestimmung der Anzahl von Dosiereinheiten des einzunehmenden Medikaments,
- das Ergreifen des Streifens (48) des gesuchten Medikaments, um diesen über eine bestimmte Länge in Abhängigkeit von der Anzahl von zu nehmenden Dosiereinheiten teilweise aus ihrem Ort herauszuziehen,
- das Abschneiden des Streifens, um **dadurch** die Anzahl der durch das Rezept vorgeschriebenen Dosiereinheiten unter Berücksichtigung der jeweiligen Orte der Dosiereinheiten des Medikaments auf dem Streifen (48) abzutrennen, und
- die Anordnung der abgeschnittenen Dosiereinheiten in einer zu diesem Zweck vorgesehen Verpackung, in welcher jede Einzelgabe von anderen Einzelgaben getrennt ist.

5. Verfahren nach einem der Ansprüche 1 bis 4,
**dadurch gekennzeichnet, dass** dieses auch einen Schritt zur Bedruckung der Verpackung umfasst, so dass Informationen realisiert werden, die ermöglichen, den Patienten, für den die so zusammengestellten Medikamente bestimmt sind und, in Bezug auf jede Einzelgabe, die Medikamente der Einzelgabe zusammen mit der Angabe des Zeitpunkts, an welchem die Einzelabgabe verabreicht werden muss, zu identifizieren.

6. Verfahren nach einem der Ansprüche 1 bis 5,
**dadurch gekennzeichnet, dass** die Medikamente jedes Rezepts einer Schale (54) jeweils mit mehreren Abteilungen angeordnet werden, wobei jede dazu bestimmt ist, eine jeweilige Einzelgabe aufzunehmen, wobei die Abteilungen der Schale am Ende der Präparierung des Rezepts durch eine Folie (58) hermetisch verschlossen werden.

7. Verfahren nach den Ansprüchen 1 bis 5,
**dadurch gekennzeichnet, dass** die Medikamente jedes Rezepts in einer Tasche angeordnet werden, wobei die Medikamente jeder Einzelgabe von solchen anderer Einzelgaben getrennt sind.

8. Verfahren nach einem Ansprüche 1 bis 7,
**dadurch gekennzeichnet, dass** die Streifen (48) des Medikaments in Teilstücken abgeschnitten werden, die ein und dasselbe Kennzeichen des Medikaments tragen, wobei diese Teilstücke in Kartuschen (32) angeordnet werden, die jeweils in den Aufnahmen (52) der Aufbewahrungseinheiten (21) angeordnet sind, wobei ein Identifikationscode des Medikaments auf der Kartusche angebracht wird.

9. System für die automatische Präparierung von Medikamentierungen eines Patienten, ausgehend von einem rechnerfähigen Rezept, das während einer definierten Zeitdauer bestimmte Medikamente in einer Anzahl vorbestimmter Einzelgaben vorschreibt, wobei die Medikamente in ihrer Primärverpackung verpackt sind, die sich in Form von Plättchen (144) darstellt, welche jeweils in jeweiligen Blistern (141) eine vorbestimmte Anzahl von Dosiereinheiten (142) ein und desselben Medikaments zusammenhalten, eine Dosiereinheit pro Blister, **dadurch gekennzeichnet, dass** dieses umfasst:
- eine Beladungs- und Vorkonditionierungseinrichtung (2) für Medikamente, die so ausgebildet ist, dass die Medikamente in ihrer Primärverpackung als Plättchen geladen werden, und zur Vorkonditionierung der Medikamente in Streifen (48), wobei jeder Streifen mehrere Plättchen zusammenfasst,
- Aufbewahrungseinheiten (21) für Medikamente, die so ausgelegt sind, dass sie die in Streifen (48) vorkonditionierten Plättchen (144) des Medikaments aufnehmen können,
- eine Einrichtung zum Greifen und Entnehmen von durch ein Rezept vorgeschriebenen Medikamenten,
- eine Konditionierungseinrichtung (4) für die Medikamente jeder durch ein Rezept vorgeschriebenen Einzelgabe, und
- einen Rechner (5), der die Rezepte aufnimmt und in Abhängig von auf den Rezepten aufgeführten Informationen den Abbruf und die Steuerung der Beladungs- und Vorkonditionierungseinrichtung (2), der Aufbewahrungseinheiten (21), der Entnahmeeinrichtung und der Konditionierungseinrichtung (4) sicherstellt.

10. System nach Anspruch 9, **dadurch gekennzeichnet, dass** die Vorkonditionierungseinrichtung (2) der Medikamentenplättchen in Streifen Elemente (47) zum Fixieren der Medikamentenplättchen auf einem Folienstreifen (48) umfasst.

11. System nach Anspruch 10, **dadurch gekennzeichnet, dass** die Vorkonditionierungseinrichtung (2) eine Schneidestelle für die Streifen (48) umfasst, die so ausgelegt ist, dass dort hergestellt werden Perforationen (82), die dazu bestimmt sind, jeweils die Blister (141) der aufzubewahrenden Medikamentenplättchen (144) aufzunehmen, und Perforationen (81) für die Vorschubkontrolle des Streifens.

12. System nach Anspruch 11, **dadurch gekennzeichnet, dass** für die Ausführung der Perforationen (82) und der Schnitte zur Abtrennung von Dosiereinheiten des Medikaments der Rechner (5) Mittel umfasst, um für jedes zu verteilende Medikamentenkennzeichen die Abmessungen der Plättchen und die Position und die Abmessungen der die Dosiereinheiten der Plättchen verschließenden Blister sowie die möglichen Schnittlinien zu speichern, die es ermöglichen, jede Dosiereinheit der Plättchen einzeln abzutrennen.

13. System nach Anspruch 12, **dadurch gekennzeichnet, dass** dieses eine optische Erfassung- und Formwiedererkennungseinrichtung umfasst, um die Abmessungen der Plättchen und die Position und die Abmessungen der die Dosiereinheiten der Plättchen verschließenden Blister sowie die möglichen Schnittlinien zu bestimmen, die es ermöglichen, jede Dosiereinheit der Plättchen einzeln abzutrennen.

14. System nach einem der Ansprüche 9 bis 13, **dadurch gekennzeichnet, dass**
die Entnahmeinrichtung einen Roboter (1) umfasst, der den Transport der Medikamente zwischen der Beladungs- und Vorkonditionierungseinrichtung (2), der Aufbewahrungseinheiten (21) und der Konditionierungseinrichtung (4) sicherstellt, wobei dieser Roboter Mittel (93, 94) umfasst, um die Folie (48) und die darauf geklebten Medikamentenplättchen zu schneiden, um so wenigstens eine Dosiereinheit des Medikaments abzutrennen.

15. System nach einem der Ansprüche 9 bis 14, **dadurch gekennzeichnet, dass** die Entnahmeeinrichtung eine Hand (12) aufweist, die eine Klammer aufweist, die aus zwei Klammerhälften (91, 92) gebildet wird, die jeweils eine Klinge (93, 94) tragen, die aus zwei geraden Abschnitten gebildet wird, welche einen Winkel zwischen 45° und 135°, vorzugsweise 90° einschließen.

16. System nach Anspruch 15, **dadurch gekennzeichnet, dass** die Klammer (91, 92) eine Aufnahme bildet, die dazu bestimmt ist, die abgeschnittenen Dosiereinheiten des Medikaments aufzunehmen, um diese bis zu der Konditionierungsstelle (4) der Einzelgabe zu transportieren.

17. System nach Anspruch 15 oder 16, **dadurch gekennzeichnet, dass** die jeweiligen Klingen (93, 94) der Klammerhälften (91, 92) in der Weise fixiert und betätigt werden, dass sie miteinander wie Scheren zusammenwirken, um den Streifen (48) und ein Plättchen (144) durchzuschneiden, und wie Zangen, um einen Streifen aus seiner Aufnahme ziehen zu können oder ein Objekt, wie eine Ampulle oder einen Kolben, einzuklemmen.

18. System nach einem der Ansprüche 15 bis 17, **dadurch gekennzeichnet, dass** die jeweiligen Klingen (93, 94) der Klammerhälften (91, 92) gezahnt sind.

19. System nach einem der Ansprüche 9 bis 18, **dadurch gekennzeichnet, dass** die Konditionierungseinrichtung (4) für die Einzelgaben eine Bedruckungseinheit (191, 120) umfasst, um in Bezug auf jede Einzelgabe den Zeitpunkt und den empfohlenen Modus der Eingabe und die Bezeichnung und die Anzahl der Dosiereinheiten der Medikamente der Einzelgabe aufzudrucken.

20. System nach einem der Ansprüche 9 bis 19, **dadurch gekennzeichnet, dass** die Konditionierungen der Einzelgaben eines Rezepts einen lesbaren und beschreibbaren Chip umfasst, in welchem die Identifikation des Patienten, für den die Präparierung bestimmt ist, und für jede Einzelgabe der vorgeschlagene Zeitpunkt der Einzelgabe und die Bezeichnung und die Anzahl der Dosiereinheiten der Medikamente der Einzelgabe gespeichert sind.

21. Streifen für die Durchführung des Verfahrens gemäß einem der Ansprüche 1 bis 8,
**dadurch gekennzeichnet, dass** dieser Perforationen (82) aufweist, die eine Form und jeweilige Positionen haben, die denjenigen der Blister (141) eines Plättchens (144) eines Medikaments entsprechen, wobei wenigstens ein Plättchen des Medikaments auf dem Streifen (48) so fixiert ist, dass jeder der Blister des Plättchens jeweils in eine der Perforationen (82) eingreift.

22. Streifen nach Anspruch 21,
**dadurch gekennzeichnet, dass** dieser eine Mehrzahl von Perforationen (82) in einer Anzahl umfasst, die einer Mehrzahl von Plättchen (144) des Medikaments entspricht, um so mehrere Plättchen des Medikaments aufnehmen zu können.

23. Streifen nach Anspruch 21 oder 22,
**dadurch gekennzeichnet, dass** dieser regelmäßig verteilte Führungsperforationen (81) umfasst.

24. Roboter zur Durchführung des Verfahrens nach einem der Ansprüche 1 bis 8,
**dadurch gekennzeichnet, dass** dieser eine Hand mit zwei Klammerhälften (91, 92) umfasst, welche jeweils eine Klinge (93, 94) tragen, die aus zwei geraden Abschnitten gebildet wird, die einen Winkel zwischen 45° und 135, vorzugsweise 90° einschließen.

25. Roboter nach Anspruch 24,
**dadurch gekennzeichnet, dass** die Klammerhälften (91, 92) mit den Klingen (93, 94) eine Aufnahme bilden.

26. Roboter nach einem der Ansprüche 24 und 25,
**dadurch gekennzeichnet, dass** die Klingen (93, 94) der beiden Klammerhälften (91, 92) so fixiert und betätigt werden, dass sie miteinander wie eine Schere zusammenwirken, um insbesondere ein auf einem Streifen (48) fixiertes Plättchen (144) zu schneiden, und als Zangen, um einen Streifen zu ziehen oder Objekte, wie Ampullen oder Kolben einzuklemmen.

27. Roboter nach einem der Ansprüche 24 bis 26,
**dadurch gekennzeichnet, dass** die Klingen (93, 94) der Klammerhälften (91, 92) gezahnt sind.

28. Roboter nach einem der Ansprüche 24 bis 27,
**dadurch gekennzeichnet, dass** die Klingen (93, 94) der Klammerhälften (91, 92) zueinander so betätigt werden, dass die durch die scharfen Ränder der Klingen gehenden Ebenen einen Winkel (α) ungleich Null bilden.
